# EUROPÄISCHE PATENTSCHRIFT

(11) **EP 1 377 489 B1**
(45) Veröffentlichungstag und Bekanntmachung des Hinweises auf die Patenterteilung: **09.01.2008**
(21) Anmeldenummer: 02759754.1
(22) Anmeldetag: 27.03.2002
(51) Int. Cl.: B61C 9/50

(54) **FAHRZEUGANTRIEB MIT BOGENZAHNKUPPLUNG**
DRIVE UNIT FOR A MOTOR VEHICLE WITH CURVED TEETH COUPLING
DISPOSITIF D'ENTRAINEMENT DE VEHICULE A ACCOUPLEMENT A DENTURE SPHERIQUE

(30) Priorität: 09.04.2001 DE 10117749
(43) Veröffentlichungstag der Anmeldung: 07.01.2004
(73) Patentinhaber: SIEMENS AKTIENGESELLSCHAFT, 80333 München (DE)
(72) Erfinder: HÖHL, Hans-Gernot, 95490 Mistelgau (DE)
(86) Internationale Anmeldenummer: PCT/DE2002/001133
(87) Internationale Veröffentlichungsnummer: WO 2002/081280

(56) Entgegenhaltungen:
- EP-A- 0 132 236
- EP-A- 0 878 368
- DE-A- 2 925 836
- US-A- 4 278 028

## Beschreibung

Die vorliegende Erfindung betrifft eine Vorrichtung zum Antrieb von insbesondere Schienenfahrzeugen mit einer Läufereinrichtung einer Induktionsmaschine, einer Welle einer Getriebeeinrichtung und einer Kupplungseinrichtung zwischen der Läufereinrichtung und der Welle.

Antriebe für Schienenfahrzeuge bestehen in der Regel aus einem Elektromotor und einem Getriebe, das eine Achse oder ein Rad des Schienenfahrzeugs antreibt. Die Antriebe sind ständig hohen Schwingungs- und Stoßbelastungen ausgesetzt, so dass der Lagerung der Antriebe selbst, sowie der Lagerung der Einzelkomponenten der Antriebe untereinander große Bedeutung zukommt.

Üblicherweise werden Antriebe für elektrische Triebfahrzeuge, insbesondere Tatzlager- und vollabgefederter Antriebe, mit fliegend gelagertem Ritzel, außen gelagertem Ritzel oder doppelt gelagertem Ritzel ausgeführt. Schienenfahrzeugantriebe, speziell Tatzlagerantriebe, mit hoher Schwingungs- und Stoßbelastung werden zweckmäßigerweise mit einem doppelt gelagerten Getriebe-Ritzel ausgeführt, wie es beispielsweise bei Adtranz-Loks BR 145/185 der Fall ist. Auch vollabgefederte Antriebe, wie GEALAIF-Antriebe, können aus Wartungsgründen mit dieser Art der Ritzellagerung ausgestattet sein.

Bei Tatzlagerantrieben und vollabgefederten Antrieben ist das Getriebe jeweils mit dem Motor starr verbunden. Damit wird zwischen dem Fahrmotor-Läufer und dem doppelt gelagerten Getrieberitzel eine Kupplung erforderlich. Diese Kupplung muss einen Winkel- und einen Axialversatz, hervorgerufen durch Toleranzen aus der Fertigung oder Schwingungs- und Stoßbelastungen, ausgleichen können. Weiterhin ist eine Kupplung erforderlich, damit die Dreifachlagerung des Fahrmotor-Läufers mit dem Getriebe-Ritzel statisch bestimmt bleibt. Hierzu werden gängigerweise Membrankupplungen oder Blechpaket-Lamellenkupplungen verwendet. Diese Kupplungen sind jedoch teuer, benötigen einen großen Bauraum und haben durch ihre elastische Biegesteifigkeit bei Auslenkung negative Rückwirkungen auf die Lagerung. Darüber hinaus haben sie den Nachteil, dass im Leerlauf die Last auf einem Lager fehlt und somit das Lager geschädigt werden kann. Ferner sind derartige Kupplungen nur unter großem Aufwand montierbar.

Die Patentschrift DE 196 02 119 C1 beschreibt in diesem Zusammenhang einen Antrieb, der einen abgefedert angeordneten Innenläufermotor aufweist, dessen Stator am Fahrwerk befestigt und welches über eine Primärfeder an einer stehenden Achse abgestützt ist. Dabei überträgt der Rotor des Motors sein Drehmoment über eine Kopplungseinrichtung und ein Getriebe zum Treibrad, wobei der Motor auf der einen Seite und das Getriebe auf der anderen Seite des Treibrads vorgesehen ist. Eine winkel- und axial-nachgiebige Kupplung- oder Kopplungseinrichtung, insbesondere eine Bogenzahnkupplung mit einer Kupplungswelle, steht mit einer Getriebewelle in Drehmomentübertragungsverbindung. Die Fertigung und Montage derartiger Antriebe ist jedoch sehr aufwendig.

Die Aufgabe der vorliegenden Erfindung besteht somit darin, die oben genannten Nachteile zu vermeiden und insbesondere einen Antrieb zu schaffen, der mit geringerem Aufwand montierbar ist.

Erfindungsgemäß wird diese Aufgabe gelöst durch eine Vorrichtung zum Antrieb von insbesondere Schienenfahrzeugen mit einer Läufereinrichtung einer Induktionsmaschine, einer Welle einer Getriebeeinrichtung und einer Kupplungseinrichtung zwischen der Läufereinrichtung und der Welle, wobei die Kupplungseinrichtung eine Bogenzahnkupplung mit einem ersten Kupplungsabschnitt mit Innenverzahnung und einem zweiten Kupplungsabschnitt mit Außenverzahnung ist, und wobei der erste Kupplungsabschnitt mit der Welle und der zweite Kupplungsabschnitt mit der Läufereinrichtung fest verbunden ist, oder umgekehrt, und wobei die Läufereinrichtung nur an der der Kupplung abgewandten Seite in einem Lager gelagert ist.

Vorteilhafte Weiterbildungen der Erfindung ergeben sich aus den Unteransprüchen.

In vorteilhafter Weise wird damit eine Kupplung realisierbar, die sehr kompakt ist und die durch das Getriebeöl geschmiert werden kann. Bei Verwendung der Bogenzahnkupplung können außerdem eine oder bei einsprechender Konstruktion sogar zwei Welle/Nabe-Verbindungen, z.B. Stirnverzahnungen oder Pressverbände, entfallen, da die Kupplung in die Läuferwelle und/oder die Ritzelwelle z.B. je zur Hälfte integriert werden kann. Weiterhin ergibt sich eine leichtere Montage gegenüber den bekannten Antrieben, da die beiden Kupplungshälften einfach axial ineinander steckbar sind.

Bei der Bogenzahnkupplung stellen sich ferner keine oder bei Drehmomentbelastung nur sehr geringe Kräfte auf die Lagerung ein, was das oben genannte Problem insbesondere bei der Membrankupplung beseitigt. Die Lagerung ist damit vollkommen statisch bestimmt.

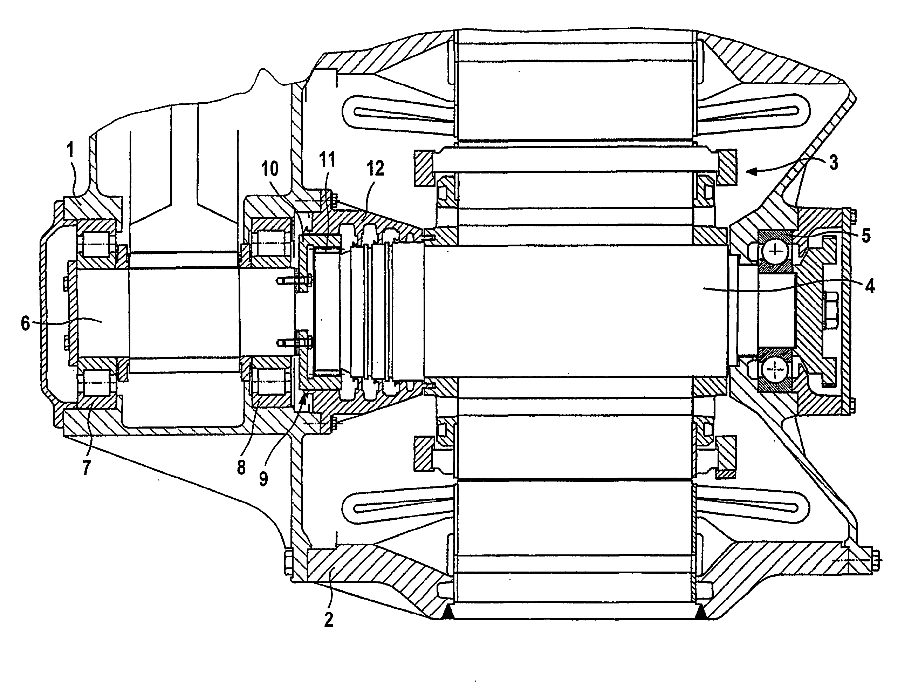

Die vorliegende Erfindung wird nun anhand der beigefügten Zeichnung näher erläutert, die einen Querschnitt durch einen erfindungsgemäßen Antrieb zeigt.

Das nachfolgend beschriebene Ausführungsbeispiel stellt eine bevorzugte Ausführungsform der vorliegenden Erfindung dar.

Gemäß der Zeichnung ist ein Getriebegehäuse 1 mit einem Motorgehäuse 2 fest verschraubt. Ein Läufer 3 umfasst die Motorwelle 4, welche an einem Ende in einem Festlager 5 gelagert ist.

Im Getriebehäuse 1 ist ein Ritzel bzw. eine Ritzelwelle 6 doppelt in den Lagern 7 und 8 gelagert.

Idealerweise besitzt die Motorwelle 4 und das Ritzel eine gemeinsame Drehachse. Aufgrund von Fertigungstoleranzen der Gehäuse 1, 2, Lager 7, 8 sowie Motorwelle 4 und Ritzel ist es notwendig, zwischen der Motorwelle 4 und dem Ritzel eine Bogenzahnkupplung 9 vorzusehen. Wie bereits erwähnt ist diese Kupplung auch notwendig, um Schwingungen und Stöße nicht unmittelbar vom Ritzel auf den Läufer 3 zu übertragen.

Die Bogenzahnkupplung besteht aus einem ersten Kupplungsabschnitt 10 mit Innenverzahnung. Dieser schalenförmige erste Kupplungsabschnitt 10 ist koaxial mit dem Ritzel bzw. der Ritzelwelle 6 verschraubt. Der erste Kupplungsabschnitt 10 kann mit dem Ritzel auch auf eine beliebig andere Art und Weise verbunden sein. Darüber hinaus kann der erste Kupplungsabschnitt 10 mit dem Ritzel auch einteilig sein.

In den ersten Kupplungsabschnitt 10 mit Innenverzahnung greift zur Drehmomentübertragung ein zweiter Kupplungsabschnitt 11 mit Außenverzahnung. Der zweite Kupplungsabschnitt 11 ist mit der Motorwelle 4 einteilig verbunden. Er kann aber auch als separate Komponente mit der Motorwelle 4 koaxial verbunden, z.B. verschraubt, werden.

Wie sich unmittelbar aus der Zeichnung ergibt, können die beiden Kupplungsabschnitte 10 und 11 bei der Montage des Getriebes 1 an den Motor 2 direkt ineinander geschoben werden. Der Montageaufwand ist damit minimal.

Da die Bogenzahnkupplung 9 Winkel- und Axialversätze des Ritzels und der Motorwelle 4 aufnimmt, ist für eine ausreichende Schmierung zu sorgen. Die Schmierung der Bogenzahnkupplung 9 kann über das ohnehin im Getriebe 1 vorhandene Öl, das auch das kupplungsseitige Lager der Ritzelwelle 6 schmiert, stattfinden. Eine Abdichtung 12 zum Motor hin ist auch bei anderen Kupplungsvarianten nötig und somit nicht spezifisch für die Bogenzahnkupplung 9.

Die Bogenzahnkupplung 9 kann selbstverständlich auch derart ausgestaltet sein, dass ein erster Kupplungsabschnitt mit Innenverzahnung mit der Motorwelle 4 und ein zweiter Kupplungsabschnitt mit Außenverzahnung mit der Ritzelwelle 6 fest verbunden bzw. einteilig ist. Insbesondere ist es auch denkbar, dass je nach Ausgestaltung die Motor- oder Ritzelwelle 4, 6 als Hohlwelle mit Innenverzahnung ausgestaltet ist, in die die jeweilig andere Welle mit außenverzahntem Kupplungsabschnitt eingreift.

Die erfindungsgemäße Kupplung der Motorwelle 4 mit der Ritzelwelle 6 durch die Bogenzahnkupplung 9 gewährleistet somit den Ausgleich von Winkel- und Axialversätzen bei minimalen Fertigungs- und Montageaufwand. Dies ist vor allem dadurch gewährleistet, dass die beiden Kupplungsabschnitte 10 und 11 mit den beiden Wellen 4 und 6 fest verbunden sind und bei der Montage leicht ineinander geschoben werden können.

## Patentansprüche

1. Vorrichtung zum Antrieb von insbesondere Schienenfahrzeugen mit einer Läufereinrichtung (3, 4) einer Induktionsmaschine, einer Welle (6), einer Getriebeeinrichtung und einer Kupplungseinrichtung (9) zwischen der Läufereinrichtung (3, 4) und der Welle (6), wobei die Kupplungseinrichtung (9) eine Bogenzahnkupplung mit einem ersten Kupplungsabschnitt (10) mit Innenverzahnung und einem zweiten Kupplungsabschnitt (11) mit Außenverzahnung ist, wobei der erste Kupplungsabschnitt (10) mit der Welle (6) und der zweite Kupplungsabschnitt (11) mit der Läufereinrichtung (3,4) fest verbunden ist, oder umgekehrt, **dadurch gekennzeichnet, dass** die Läufereinrichtung (3, 4) nur an der der Kupplung abgewandten Seite in einem Lager (5) gelagert ist.

2. Vorrichtung nach Anspruch 1, wobei die Welle (6) eine doppelt gelagerte Ritzelwelle ist.

3. Vorrichtung nach einem der Ansprüche 1 bis 2, wobei der erste oder zweite Kupplungsabschnitt (10,11) der Bogenzahnkupplung (9) einteilig mit der Läufereinrichtung (3,4) oder der Welle (6) verbunden ist.

4. Vorrichtung nach einem der Ansprüche 1 bis 3, wobei der erste oder zweite Kupplungsabschnitt (10,11) der Bogenzahnkupplung (9) mit der Welle (6) oder der Läufereinrichtung (3) durch Schraubverbindung mit Stirnverzahnung verbunden ist.

5. Vorrichtung nach einem der Ansprüche 1 bis 4, wobei die Schmierung der Kupplungseinrichtung durch das Öl der Getriebeeinrichtung erfolgt.

## Claims

1. Apparatus for driving in particular railway vehicles with a rotor device (3, 4) of an induction machine, a shaft (6), a transmission device, and a coupling device (9) between the rotor device (3, 4) and the shaft (6), wherein the coupling device (9) is a curved teeth coupling with a first coupling section (10) with internal tooth system and a second coupling section (11) with external tooth system, wherein the first coupling section (10) is securely connected with the shaft (6), and the second coupling section (11) is securely connected with the rotor device (3,4) or vice versa, **characterised in that** the rotor device (3, 4) is only supported in a bearing (5) on the side facing away from the coupling.

2. Apparatus according to claim 1, wherein the shaft (6) is a double supported pinion shaft.

3. Apparatus according to one of claims 1 to 2, wherein the first or the second coupling section (10, 11) of the curved teeth coupling (9) is connected in single-piece configuration with the rotor device (3, 4) or the shaft (6).

4. Apparatus according to one of claims 1 to 3, wherein the first or the second coupling sections (10, 11) of the curved teeth coupling (9) is connected with the shaft (6) or the rotor device (3, 4) by a screw connection with radial tooth system.

5. Apparatus according to one of claims 1 to 4, wherein lubrication of the coupling device is implemented by the oil of the transmission device.

## Revendications

1. Dispositif pour l'entraînement notamment de véhicules sur rails, comprenant un dispositif de rotor (3, 4) d'une machine à induction, un arbre (6), un dispositif de transmission et un dispositif d'accouplement (9) entre le dispositif de rotor (3, 4) et l'arbre (6), le dispositif d'accouplement (9) étant un accouplement à denture courbe ou hypoïde avec un premier tronçon d'accouplement (10) à denture intérieure et un deuxième tronçon d'accouplement (11) à denture extérieure, le premier tronçon d'accouplement (10) étant relié de manière fixe à l'arbre (6) et le deuxième tronçon d'accouplement (11) au dispositif de rotor (3, 4), ou inversement,
**caractérisé en ce que** le dispositif de rotor (3, 4) n'est monté dans un palier ou roulement (5) que sur le côté opposé à celui dirigé vers l'accouplement.

2. Dispositif selon la revendication 1, dans lequel l'arbre (6) est un pignon arbré monté sur palier ou roulement de manière double.

3. Dispositif selon l'une des revendications 1 ou 2, dans lequel le premier ou le deuxième tronçon d'accouplement (10, 11) de l'accouplement à denture courbe ou hypoïde (9) est relié d'un seul tenant au dispositif de rotor (3, 4) ou à l'arbre (6).

4. Dispositif selon l'une des revendications 1 à 3, dans lequel le premier ou le deuxième tronçon d'accouplement (10, 11) de l'accouplement à denture courbe ou hypoïde (9) est relié à l'arbre (6) ou au dispositif de rotor (3) par une liaison à vis et crantage frontal plan.

5. Dispositif selon l'une des revendications 1 à 4, dans lequel la lubrification du dispositif d'accouplement s'effectue par l'huile du dispositif de transmission.
